# EUROPEAN PATENT SPECIFICATION

(11) **EP 3 006 367 B1**
(45) Date of publication and mention of the grant of the patent: **19.09.2018**
(21) Application number: 14804052.0
(22) Date of filing: 27.05.2014
(51) Int. Cl.: B65D 55/06, B65D 23/00, B65D 51/24

(54) **SEALING LABEL WITH IDENTIFICATION FUNCTION AND CONTAINER WRAPPED WITH SAID SEALING LABEL**
SIEGELETIKETT MIT IDENTIFIZIERUNGSFUNKTION UND MIT DEM BESAGTEN SIEGELETIKETT UMWICKELTER BEHÄLTER
ÉTIQUETTE D'ÉTANCHÉITÉ AYANT UNE FONCTION D'IDENTIFICATION ET RÉCIPIENT ENVELOPPÉ AVEC LADITE ÉTIQUETTE D'ÉTANCHÉITÉ

(30) Priority: 27.05.2013 JP 2013110939
(43) Date of publication of application: 13.04.2016
(73) Proprietor: Santen Pharmaceutical Co., Ltd, Osaka-shi Osaka 533-8651 (JP)
(72) Inventor: AZUMA Yoshiyuki, Osaka-shi Osaka 533-8651 (JP)
(74) Representative: Müller-Boré & Partner Patentanwälte PartG mbB
(86) International application number: PCT/JP2014/063905
(87) International publication number: WO 2014/192713

(56) References cited:
- WO-A1-00/63087
- FR-A1- 2 763 921
- JP-A- H0 977 100
- JP-A- H1 072 047
- JP-A- S5 262 000
- JP-A- H09 226 793
- JP-A- H09 226 793
- JP-A- 2002 128 085
- US-A- 3 983 645

## Description

### Technical Field

The present invention relates to a sealing label for wrapping a container including a container body and a lid portion detachably attached to an outlet of the container body. The invention relates also to a container wrapped with the sealing label.

### Background Art

A sealing label for wrapping a container having a lid portion is used for preventing unauthorized unsealing in order to ensure that this container is an unopened unused container (see e.g. Patent Documents 1-2).

A sealing label disclosed in Patent Document 1 includes an upper region covering a lid portion and a lower region covering a container body. In the upper region, there is provided a colored layer for identifying purpose in the form of a band extending along an upper end edge thereof. A tab portion projects from an upper end portion of the upper region of the sealing label. And, a perforation line extends vertically across the upper region from the tab portion. This perforation line is connected with another perforation line which is provided at the boundary between the upper region and the lower region. At the time of opening of the sealing label, the upper region is removed.

A sealing label disclosed in Patent Document 2 includes an upper region covering a lid portion and a lower region covering a container body. A transverse perforation line extends along the boundary between the upper region and the lower region, and an inclined perforation line extends obliquely across the upper region. In order to allow cutting of the transverse perforation line simultaneously with cutting of the inclined perforation line, an elongate large uncut portion is provided in a connection region between the transverse perforation line and the inclined perforation line. The upper region is removed in association with turning of the lid portion.

### Citation List

### Patent Literature

Patent Document 1: Japanese Unexamined Patent Application Publication No. 2008-068907
Patent Document 2: Japanese Unexamined Patent Application Publication No. 2001-130621

JP H09 226793 A describes a cover film for a main body and lid portion of a container to prevent the lid from being freely opened. A breakable part is provided which is broken by twisting the container main body and the lid.

FR 2 763 921 A1 describes a thermoretractable cover for a container comprising a cutaway band.

US 3 983 645 A describes a label having cuts, wherein these cuts fill with softened container material during a heat sealing mechanism to form a mechanical lock between lid portion and container body.

JP S52 62000 A discloses a decorative neckband label for a bottle which comprises tool impressed lines in the sleeve material and a pilfer-proof feature.

### Summary of Invention

### Technical Problem

In the case of the sealing labels disclosed in Patent Documents 1 and 2, after unsealing, the upper region covering the lid portion is removed, so that the integrity (unity) between the lid portion and the container body is lost. As a result, in the case of a user having many eye dropper containers, the user may attach an erroneous lid portion which is different from the correct one. On the other hand, there is a conceivable arrangement for ensuring integrity between the lid portion and the container body by e.g. coloring the lid portion. In this case, however, there will arise insufficiency of variation for allowing identification of many kinds of container contents. Thus, a practical solution has not yet been achieved.

As another arrangement for ensuring integrity between the lid portion and the container body, it is also conceivable to provide an identifying mark directly in the lateral face of the lid portion. However, as the lid portion has a non-planar shape, provision of such identifying mark is not easy. Moreover, provision of identifying mark in the lateral face of the lid portion involves disadvantage of manufacturing cost increase also.

Then, in view of the above-described state of the art, the object of the present invention is to provide a sealing label providing superior identification function, greater convenience of use and achieving manufacturing cost reduction, as well as a container wrapped with such sealing label.

### Solution to Problem

According to the present invention, there is provided a sealing label for wrapping a container including a container body and a lid portion detachably attached to an outlet of the container body, the sealing label comprising:
an upper region covering all or a part of the lid portion;
a lower region covering all or a part of the container body;
a cutaway region disposed between the upper region and the lower region;
a tear-off line provided in a boundary between the cutaway region and the lower region as well as in a boundary between the cutaway region and the upper region;
wherein an identifying mark comprised of a graphic pattern is provided to the lower region and a further identifying mark same as or similar to the identifying mark is provided to the upper region, a region comprised of the upper region and the cutaway region or a region comprised of the upper region, the cutaway region and the lower region, thereby to allow recognition of unity between the lid portion and the container body.

In the above-described configuration, as a further identifying mark same as or similar to an identifying mark comprised of a shape, a pattern, a color or any combination thereof and provided to the lower region is provided to the upper region, a region comprised of the upper region and the cutaway region or a region comprised of the upper region, the cutaway region and the lower region, integrity (unity) between the lid portion and the container body can be readily recognized. Further, the identifying mark comprised of a shape, a pattern, a color or any combination thereof can be an indication which can be easily recited or referred to by the user and which can be of great variety, such as a graphic pattern of a triangle, a square, a rhombus, a circle, a star shape, a crescent shape, a heart shape, etc. or a single letter such as an alphabet character or a Japanese *"hiragana"* character, etc. Therefore, even when the contents of the container exist in great variety, identifying marks for each common contents can be readily created. Moreover, the identifying mark comprised of a shape, a pattern, a color or any combination thereof can be readily recognized by vison-handicapped persons if the indication is provided with e.g. embossing treatment.

Moreover, since the cutaway region is disposed between the upper region and the lower region of the sealing label, the upper region and the lower region will remain attached to the lid portion and the container body respectively, so that the integrity (unity) between the container body and the respectively, after unsealing. So, the integrity between the lid portion and the container body can be maintained during the period of continued use of the container.

In the above-described sealing label according to the present invention, preferably, a plurality of the identifying marks are provided in the lower region; and/or a plurality of the further identifying marks same as or similar to the identifying marks are provided to the upper region, the region comprised of the upper region and the cutaway region or the region comprised of the upper region, the cutaway region and the lower region.

In the above-described configuration, a plurality of identifying marks are provided in the lower region or the region including at least the upper region of the sealing label. This arrangement enables visual recognition of the identifying marks from any viewing angle in the circumferential direction of the container. In particular, at the time of use of the container, the lid portion is to be removed. Therefore, by providing a plurality of the same or similar identifying marks in the upper region covering the lid portion and the lower region covering the container body, visual recognizability is improved. Consequently, the erroneous attachment by the user which could occur between the container body and the lid portion can be prevented in a reliable manner.

In the above-described sealing label according to the present invention, preferably, a tab portion for unsealing is provided in the cutaway region.

With the provision of the tab portion in the cutaway region as proposed in the above-described arrangement, an opening operation of the sealing label is made easy. Further, the leading end direction of the tab portion can be in any one of the upper region, the cutaway region and the lower region in order to facilitate gripping thereof.

In the above-described sealing label according to the present invention, preferably, an adhesive agent is applied to a predetermined area of back faces of the upper region and the lower region.

With the adhesive agent applied to a predetermined area of back faces of the upper region and the lower region in the above-described arrangement, bonding of the sealing label to the container is improved. Therefore, after the cutting-away of the cutaway region, the upper region and the lower region of the sealing label will remain adhered to the lid portion and the container body, lid portion can be still recognized.

A container to which the sealing label of the invention is attached is obtained by wrapping the inventive sealing label over a container.

The inventive sealing label allows addition of an identifying mark to a surface of this sealing label by a simple method such as printing. And, there is no need to provide the identifying mark directly to the lid portion and the container body. Thus, the label can contribute also to reduction of manufacturing cost.

In the above-described container according to the present invention, for further enhancement of the integrity (unity) between the container body and the lid portion, a top face of the lid portion may be provided with a further identifying mark same as or similar to the identifying mark provided in the sealing label and comprised of a shape, a pattern, a color or any combination thereof.

With the above-described arrangement, with the provision of a further identifying mark same as or similar to the identifying mark provided in the sealing label to the top face of the lid portion, the integrity (unity) between the container body and the lid portion can be recognized also from the upper side of the container.

### Brief Description of Drawings

[Fig. 1] is a front view showing a sealing label,
[Fig. 2] is a front view showing the sealing label relating to the first embodiment of the present invention is provided with identifying marks,
[Fig. 3] is perspective view showing a container wrapped in the sealing label relating to the first embodiment of the present invention,
[Fig. 4] is a perspective view showing the container relating to the first embodiment of the present invention, with its sealing label being opened,
[Fig. 5] is a front view showing the sealing label relating to the first embodiment of the present invention is provided with identifying marks,
[Fig. 6] is a front view showing the sealing label relating to the first embodiment of the present invention is provided with identifying marks,
[Fig. 7] is a front view showing the sealing label relating to the first embodiment of the present invention is provided with identifying marks,
[Fig. 43] is a front view showing the sealing label relating to the first embodiment of the present invention is provided with identifying marks,

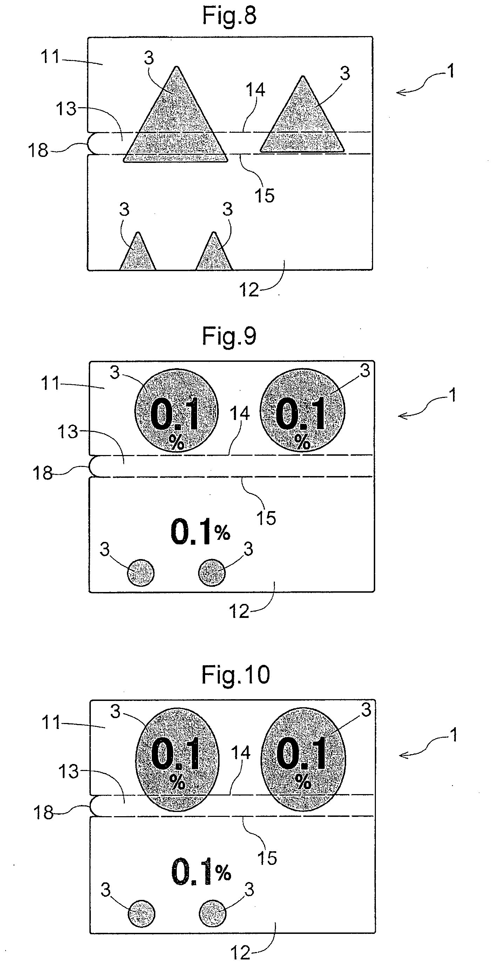

[Fig. 8] is a front view showing the sealing label relating to the first embodiment of the present invention is provided with identifying marks,
[Fig. 9] is a front view showing the sealing label relating to the first embodiment of the present invention is provided with identifying marks,
[Fig. 10] is a front view showing the sealing label relating to the first embodiment of the present invention is provided with identifying marks,

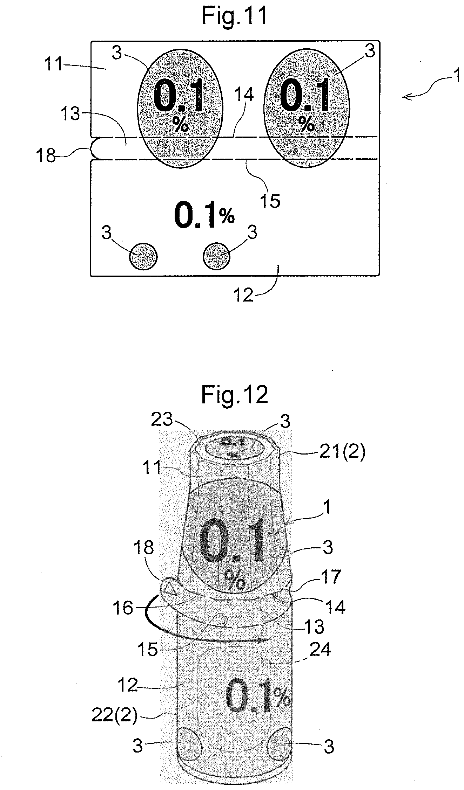

[Fig. 11] is a front view showing the sealing label relating to the first embodiment of the present invention is provided with identifying marks,
[Fig. 12] is a perspective view showing the container relating to the first embodiment of the present invention, with its sealing label being opened,

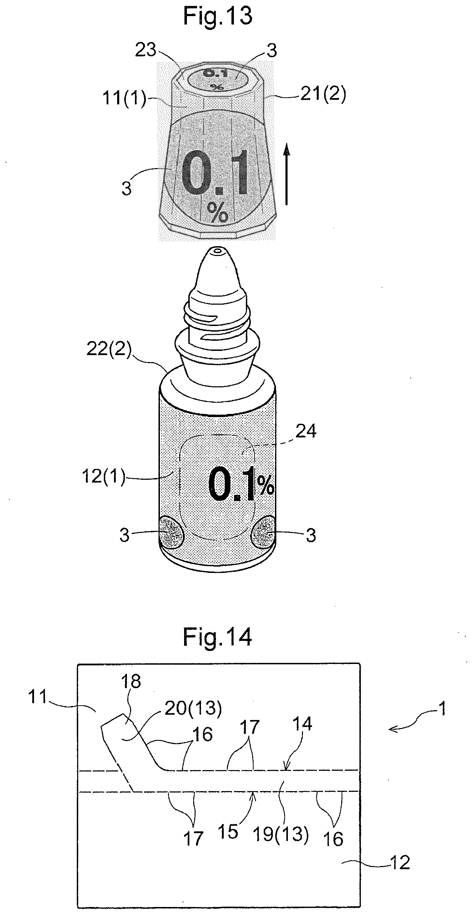

[Fig. 13] is a front view showing the sealing label relating to the first embodiment of the present invention is provided with identifying marks,
[Fig. 14] is a front view showing a sealing label relating to a second embodiment of the present invention,

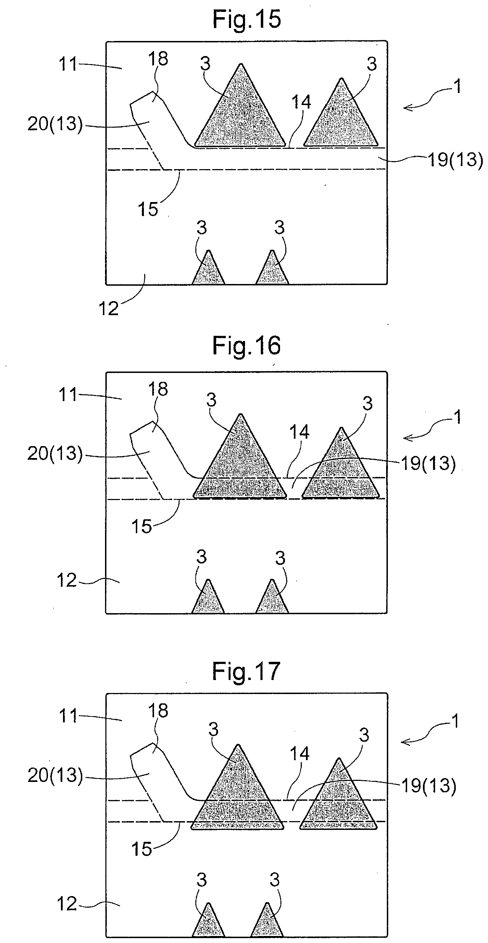

[Fig. 15] is a front view showing the sealing label relating to the second embodiment of the present invention is provided with identifying marks,
[Fig. 16] is a front view showing the sealing label relating to the second embodiment of the present invention is provided with identifying marks,
[Fig. 17] is a front view showing the sealing label relating to the second embodiment of the present invention is provided with identifying marks,

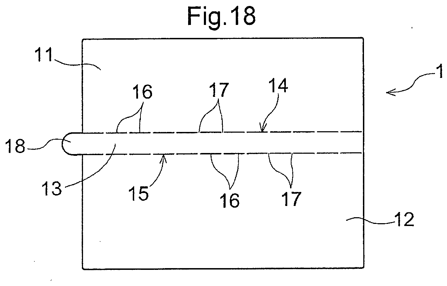

[Fig. 18] is a front view showing a sealing label relating to a further embodiment of the present invention,

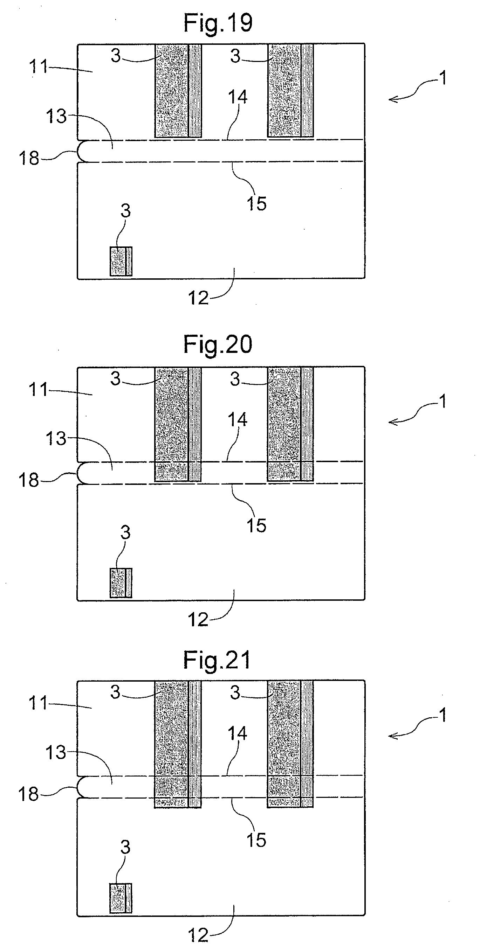

[Fig. 19] is a front view showing the sealing label relating to the first embodiment of the present invention is provided with identifying marks,
[Fig. 20] is a front view showing the sealing label relating to the first embodiment of the present invention is provided with identifying marks,
[Fig. 21] is a front view showing the sealing label relating to the first embodiment of the present invention is provided with identifying marks,

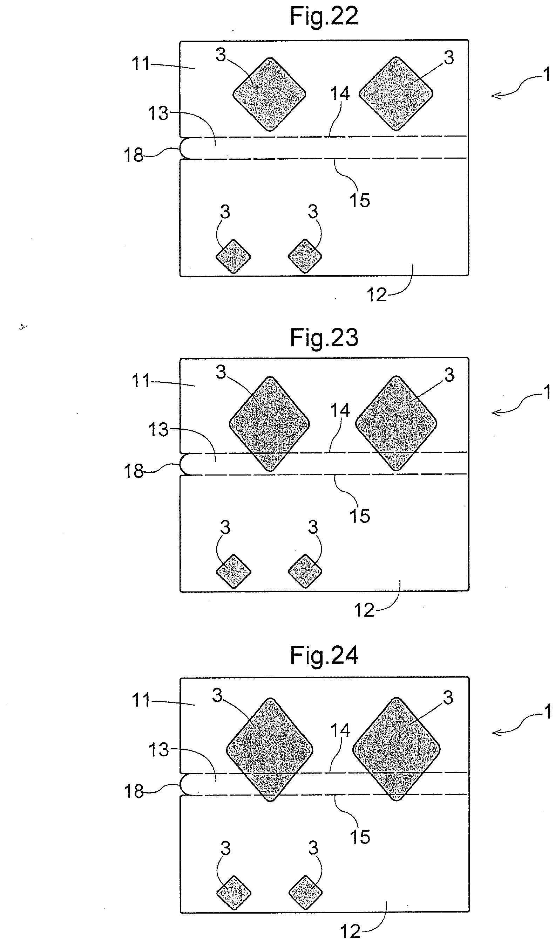

[Fig. 22] is a front view showing the sealing label relating to the first embodiment of the present invention is provided with identifying marks,
[Fig. 23] is a front view showing the sealing label relating to the first embodiment of the present invention is provided with identifying marks,
[Fig. 24] is a front view showing the sealing label relating to the first embodiment of the present invention is provided with identifying marks,

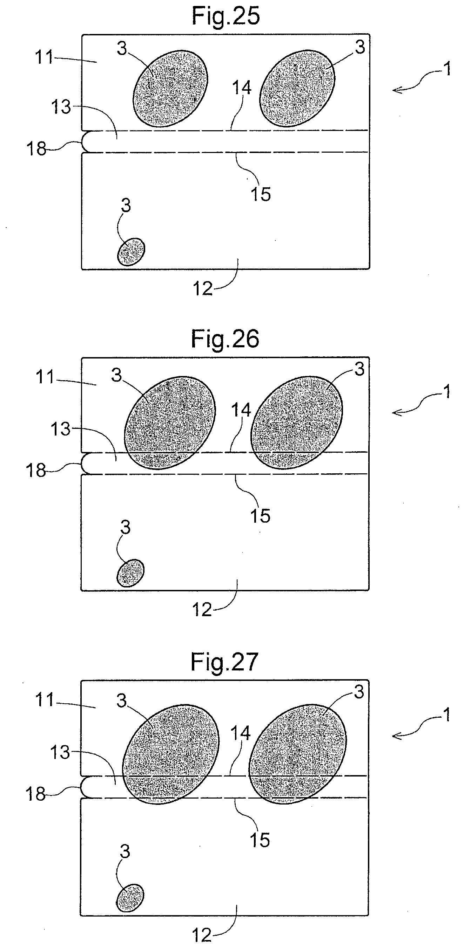

[Fig. 25] is a front view showing the sealing label relating to the first embodiment of the present invention is provided with identifying marks,
[Fig. 26] is a front view showing the sealing label relating to the first embodiment of the present invention is provided with identifying marks,
[Fig. 27] is a front view showing the sealing label relating to the first embodiment of the present invention is provided with identifying marks,

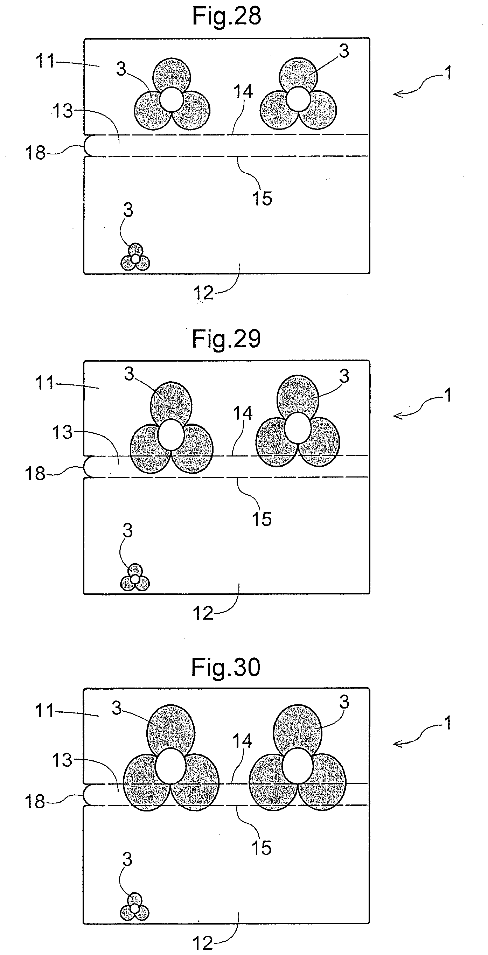

[Fig. 28] is a front view showing the sealing label relating to the first embodiment of the present invention is provided with identifying marks,
[Fig. 29] is a front view showing the sealing label relating to the first embodiment of the present invention is provided with identifying marks,
[Fig. 30] is a front view showing the sealing label relating to the first embodiment of the present invention is provided with identifying marks,

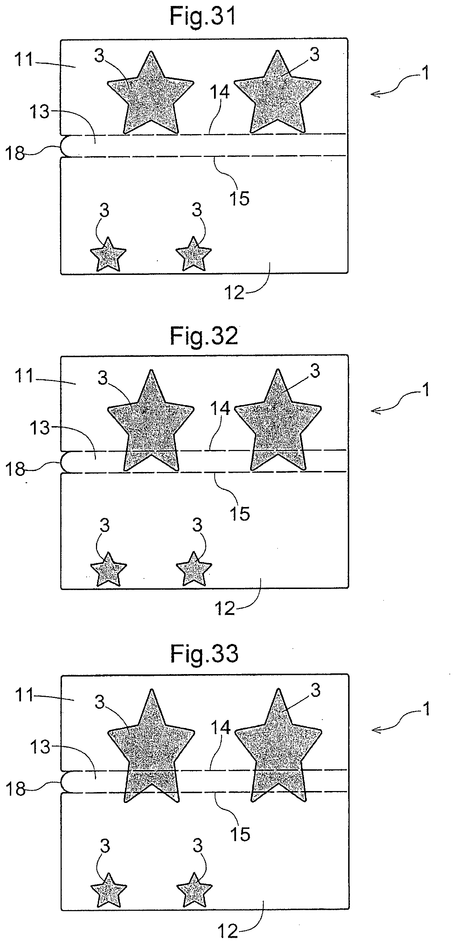

[Fig. 31] is a front view showing the sealing label relating to the first embodiment of the present invention is provided with identifying marks,
[Fig. 32] is a front view showing the sealing label relating to the first embodiment of the present invention is provided with identifying marks,
[Fig. 33] is a front view showing the sealing label relating to the first embodiment of the present invention is provided with identifying marks,

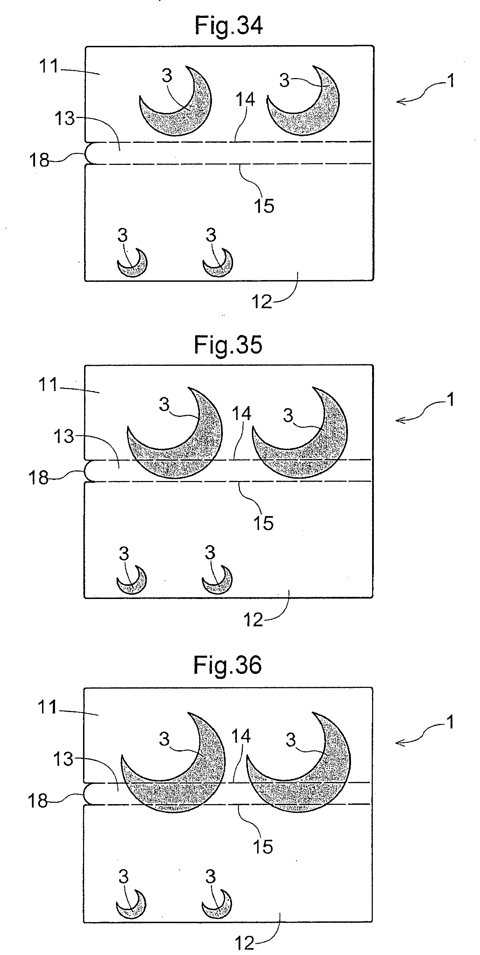

[Fig. 34] is a front view showing the sealing label relating to the first embodiment of the present invention is provided with identifying marks,
[Fig. 35] is a front view showing the sealing label relating to the first embodiment of the present invention is provided with identifying marks,
[Fig. 36] is a front view showing the sealing label relating to the first embodiment of the present invention is provided with identifying marks,

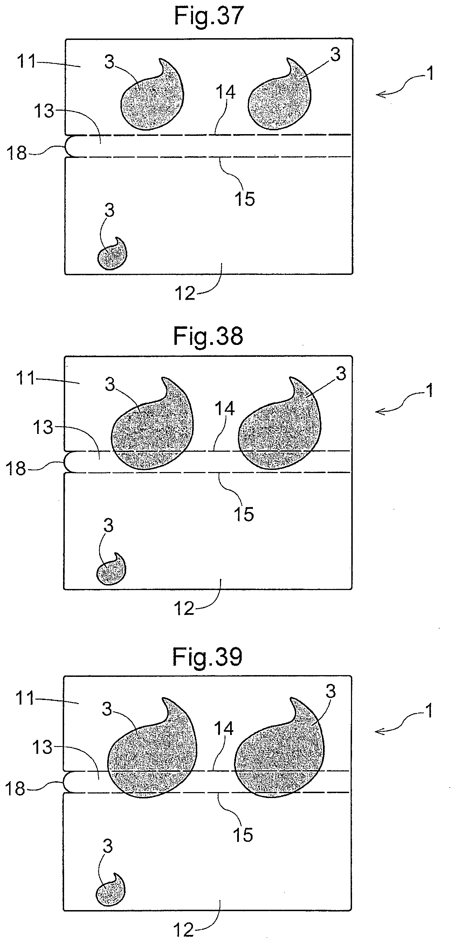

[Fig. 37] is a front view showing the sealing label relating to the first embodiment of the present invention is provided with identifying marks,
[Fig. 38] is a front view showing the sealing label relating to the first embodiment of the present invention is provided with identifying marks,
[Fig. 39] is a front view showing the sealing label relating to the first embodiment of the present invention is provided with identifying marks,

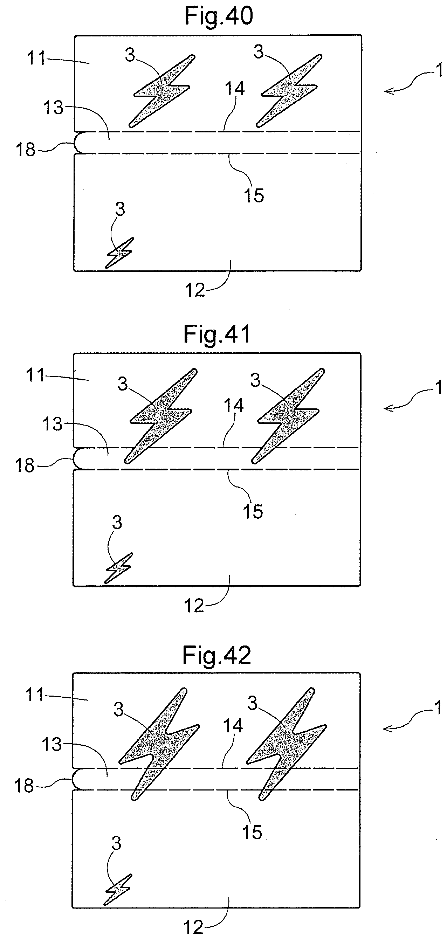

[Fig. 40] is a front view showing the sealing label relating to the first embodiment of the present invention is provided with identifying marks,
[Fig. 41] is a front view showing the sealing label relating to the first embodiment of the present invention is provided with identifying marks,
[Fig. 42] is a front view showing the sealing label relating to the first embodiment of the present invention is provided with identifying marks,

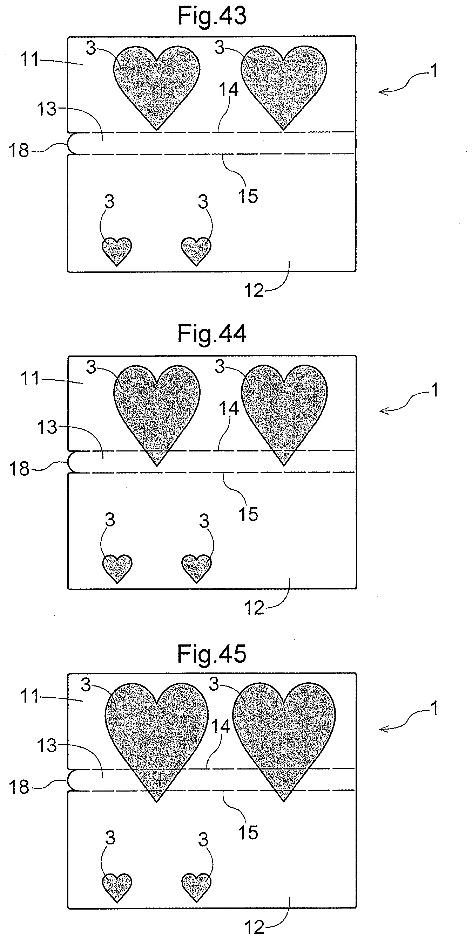

[Fig. 44] is a front view showing the sealing label relating to the first embodiment of the present invention is provided with identifying marks,
[Fig. 45] is a front view showing the sealing label relating to the first embodiment of the present invention is provided with identifying marks,

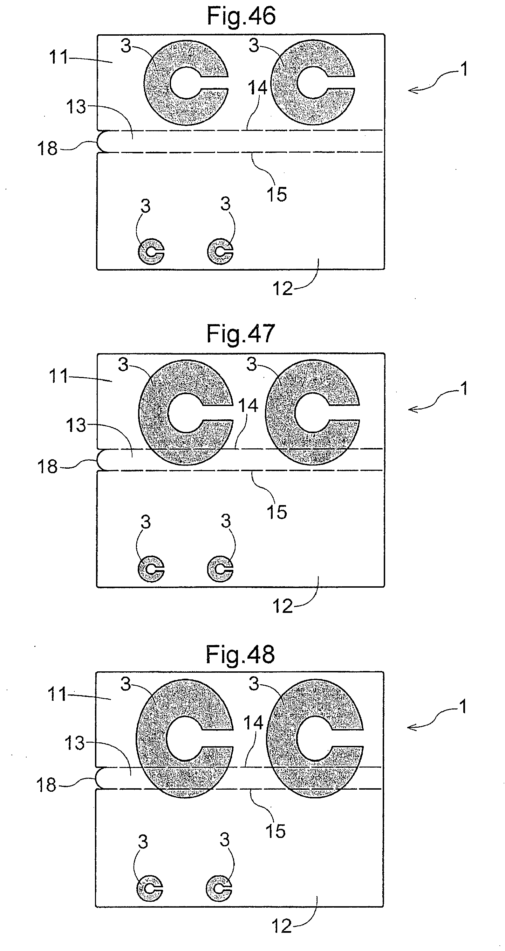

[Fig. 46] is a front view showing the sealing label relating to the first embodiment of the present invention is provided with identifying marks,
[Fig. 47] is a front view showing the sealing label relating to the first embodiment of the present invention is provided with identifying marks, and
[Fig. 48] is a front view showing the sealing label relating to the first embodiment of the present invention is provided with identifying marks.

### Description of Embodiments

Next, embodiments of a sealing label 1 relating to the present invention will be explained with reference to the accompanying drawings. In these embodiments, as an exemplary application of the sealing label 1, there will be explained a case in which the sealing label 1 is used for wrapping an eye dropper container 2. However, it is understood that the present invention is not limited to the following embodiments and various modifications thereof are possible.

### [First Embodiment]

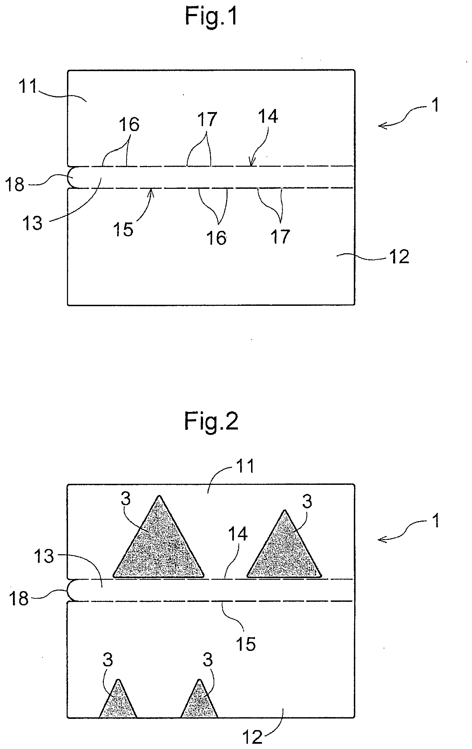

Fig. 1 shows a front view of a sealing label 1. A rear view of the sealing label 1 will be omitted herein since such view will show in right/left symmetry relative to the front view.

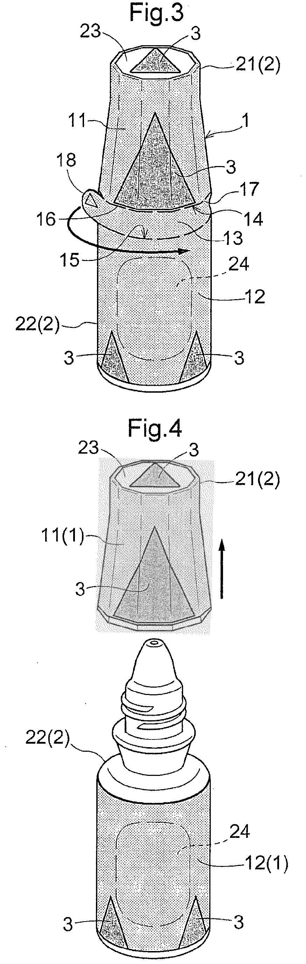

Fig. 2 shows a plane view showing the sealing label 1 relating to the first embodiment is provided with identifying marks 3 (a shape, a pattern, a color or combinations thereof). Further, Fig. 3 and Fig. 4 show perspective views respectively showing a condition of the sealing label 1 relating to this embodiment is wrapped around an eye dropper container 2 ("container") and a condition of it being opened, which container includes a truncated cone-shaped lid portion 21 having a polygonal outer shape, and a container body 22 in the form of an elongate cylinder provided with a pressing recessed portion 24 at the center thereof.

The sealing label 1 in this embodiment, as shown in Fig. 1, is formed of a resin film having a rectangular shape and this label comprises a shrink label which is to be wrapped around and retained on the eye dropper container 2 with e.g. heat shrinkage thereof. Further, the sealing label 1 is not limited to a shrink label, but can be a stretch label for instance.

The sealing label 1, as shown in Fig. 3, includes an upper region 11 covering all or a part of the lid portion 21, a lower region 12 covering all or a part of the container body 22, and a cutaway region 13 disposed between the upper region 11 and the lower region 12, when the lid portion 21 is fitted on the container body 22. In this embodiment, the upper region 11 covers a lateral face of the lid portion 21 and a portion of its top face 23, and the lower region 12 covers a lateral face of the container body 22. Incidentally, specific coverages of the upper region 11 and the lower region 12 are not particularly limited as long as these respectively cover all or a part of the lid portion 21 and the container body 22.

In the boundary between the cutaway region 13 and the upper region 11, there is provided a perforation line 14 (tear-off line), and in the boundary between the cutaway region 13 and the lower region 12, a further perforation line 15 (tear-off line) is provided. Namely, the cutaway region 13 is a laterally elongate band-like region which extends from one end of the sealing label to the other end of the sealing label in a direction of wrapping the sealing label 1 around the eye dropper container 2. And, along the vertical direction of this cutaway region 13, there are provided the upper region 11 and the lower region 12 having rectangular shapes via the perforation lines 14, 15. In this description, the term "perforation line" means a group of through holes (cut portions 16) extending through the front and back faces of the sealing label 1 like sewing stitches spaced apart from each other by a predetermined distance. In such perforation line, between adjacent through holes, non-through portions (uncut portions 17) exist.

Further, in the cutaway region 13 at its end, there is also formed a tab portion 18 used for unsealing. In this embodiment, the tab portion 18 is formed integral with the cutaway region 13 along the lateral direction. The projection amount of this tab portion 18 will be set to an appropriate length so that this tab portion 18 will hardly be twisted according to thermal contraction properties of the sealing label 1.

For using the eye dropper container 2, the tab portion 18 will be gripped and pulled to tear apart and remove the cutaway region 13 along the circumferential direction of the eye dropper container 2, thereby to open the sealing label 1. Incidentally, the shape of the leading end of the tab portion 18 in this embodiment is a semi circular shape. However, in actuality, this shape can also be an angular shape, a triangular shape, etc. and will be appropriately determined, in consideration to such factors as shrinkage strength, a gripping ease, etc. Further, the position of the tab portion 18 is not limited to an end of the cutaway region 13.

Preferably, the cut portions 16 of the perforation lines 14, 15 are formed longer than the uncut portions 17. With this arrangement, the perforation lines 14, 15 can be torn off more smoothly. Incidentally, the front-view shape of each single cut portion 16 is not particularly limited, but can be e.g. a narrow linear shape, a needle-hole shape (punched approximately circular shape or approximately oval shape) as long as this shape allows easy and smooth tearing. Fig. 1 shows a narrow linear shape.

In the sealing label 1, over a predetermined area in its back face, an amount of adhesive agent is applied. In this, preferably, such adhesive agent is applied over a predetermined area in the back face of the upper region 11 and the lower region 12. Alternatively, the sealing label 1 can be affixed by being wrapped around the lid portion 21 and the container body 22 and then heat-shrunk thereon. Further alternatively, the sealing label 1 can be prepared in a cylindrical form, which then is to be fitted on the lid portion 21 and on the container body 22 and then heat-shrunk to be affixed thereto respectively.

As shown in Fig. 4, when the sealing label 1 of the eye dropper container 2 is opened, the cutaway region 13 will be removed. Whereas, the upper region 11 and the lower region 12 will remain affixed to the lid portion 21 and the container body 22, respectively. Therefore, by collating respective identifying marks 3 provided respectively in the upper region 11 and the lower region 12, the integrity (unity) between the lid portion 21 and the container body 22 can be recognized easily.

Next, with reference to the plane views of Fig. 2 and Figs. 5-8, there will be explained various modes of the identifying marks 3 which each comprises a shape, a pattern, a color or any combination thereof. Incidentally, for the sake of readiness of understanding of the illustrations, the identifying marks 3 are provided with a color tone, in comparison with the rest, but the color of these can be same, instead.

The identifying mark 3 comprises a shape, a pattern, a color or some combination thereof. Preferably, the identifying mark 3 will be created in consideration to such factors as medical substances, contents to be held in the eye dropper container 2.

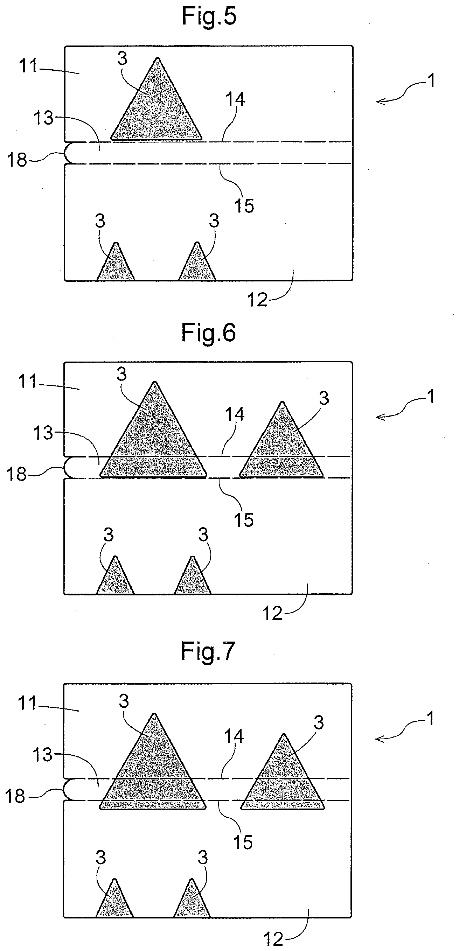

As shown in Fig. 2 and Fig. 5, in the upper region 11 and the lower region 12 respectively, there is/are provided one or a plurality (two in the case of the illustrations) of such identifying marks 3 of a same or similar triangular shape. Further, the identifying marks 3 in this embodiment are provided with a coloring in their triangular shape. Therefore, the integrity between the lid portion 21 and the container body 22 can be recognized omnidirectionally.

Variations are made possible by varying the shape, the pattern, the color of the identifying marks 3. Therefore, even when the contents of the eye dropper container 2 are of a great variety, an identifying mark 3 common for each kind of contents can be easily created.

In the eye dropper container 2, after opening thereof with gripping of the tab portion 18 of the sealing label 1, the upper region 11 and the lower region 12 will remain attached to the lid portion 21 and the container body 22, respectively, so that the recognizability of the identifying marks 3 can be retained. Therefore, throughout the period of continued use of the eye dropper container 2, the integrity between the lid portion 21 and the container body 22 will be maintained, so that a user will visually recognize the identifying marks 3 in the container body 22 and the identifying marks 3 in the lid portion 21, so that the user can attach the lid portion 21 to the container body 22 without error.

As shown in Fig. 2, in the upper region 11 of the sealing label 1, there are provided two identifying marks 3 along the right/left direction thereof. Preferably, these two identifying marks 3 in the upper region 11 should be disposed such that each identifying mark 3 will be disposed in the front face and the rear face of the lid portion 21. Further, in the lower region 12 of the sealing label 1, there are provided two identifying marks 3 such that these identifying marks 3 will be disposed in right/left symmetry relative to the center of the identifying mark 3 (the identifying mark 3 in the front face of the lid portion 21 when the sealing label 1 is wrapped around the eye dropper container 2). The two identifying marks 3 in the lower region 12, as shown in Figs. 3-4, will be arranged on the opposed sides as seen from the front face of the container body 22 when the sealing label 1 is wrapped around the eye dropper container 2. Incidentally, the numbers of the identifying marks 3 to be provided in the upper region 11 and the lower region 12 are not limited to one or two, but can be three or more.

Provision of such multiple identifying marks 3 in the upper region 11 and the lower region 12 allows omnidirectional recognizability of the identifying marks 3, so that erroneous attachment of the lid portion 21 to the container body 22 can be avoided even more reliably. In particular, provision of two identifying marks 3 in the lower region 12 will further promote the omnidirectional recognizability of the identifying marks 3.

Moreover, in the lower region 12 of the sealing label 1, there may be provided a rectangular character indicating portion which can have e.g. a white background. And, preferably, in this character indicating portion, medical substances, the serial manufacturing number etc. of an eye dropping agent will be written.

As shown in Fig. 3, an identifying mark 3 can be provided also in a top face 23 of the lid portion 21. This identifying mark 3 to be provided in the top face 23 can be formed integral with the lid portion 21 or can be provided separately in the top face 23 of the lid portion 21. Provision of the identifying mark 3 in the top face 23 provides ability of recognition of the integrity between the lid portion 21 and the container body 22 from the upper side of the lid portion 21 as well.

Figs. 6 through 8 show different modes of identifying marks 3 to be provided in the surface of a region including at least the upper region 11. Fig. 6 shows an arrangement wherein the identifying marks 3 are provided in a region consisting of the upper region 11 and the cutaway region 13. Further, Fig. 7 shows an arrangement wherein the identifying marks 3 are provided in a region consisting of the upper region 11, the cutaway region 13 and the lower region 12. Fig. 8 shows a further arrangement wherein of two identifying marks 3, one identifying mark 3 is provided in the region consisting of the upper region 11, the cutaway region 13 and the lower region 12 and the other identifying mark 3 is provided in the region consisting of the upper region 11 and the cutaway region 13.

Incidentally, aside from the above-described arrangements, a plurality of identifying marks 3 can be provided in any appropriate combination of the region consisting of the upper region 11, the region consisting of the upper region 11 and the cutaway region 13 or the region consisting of the upper region 11, the cutaway region 13 and the lower region 12.

As shown in Figs. 6-8, in the case also of the arrangement wherein the identifying marks 3 are provided in the cutaway region 13, since the identifying marks 3 are formed in the upper region 11 in such a manner as to allow "imaging" of the original shape, the recognizability will not be lost even after cutaway of the cutaway region 13. Further, with absence of the portion of the cutaway region 13 in the identifying marks 3, it becomes possible to determine presence/absence of opening of the sealing label 1.

Figs. 9 through 11 show examples in which the upper region 11 and the lower region 12 are provided with a plurality (two in the illustrated cases) of same or similar circular patterns as the identifying marks 3. In Fig. 9, the identifying marks 3 are provided in the upper region 11. In Fig. 10, the identifying marks 3 are provided in the region consisting of the upper region 11 and the cutaway region 13. In Fig. 11, the identifying marks 3 are provided in the region consisting of the upper region 11, the cutaway region 13 and the lower region 12.

Further, as shown in Figs. 9 through 13, a medical content of the eye dropper container 2 are shown within the identifying marks 3 present in the upper region 11 and the top face 23. Further, when the sealing label 1 is wrapped over the eye dropper container 2 as shown in Fig. 12, in the lower region 12 and at a position located adjacent the center of the front face of the container body 22, there is shown a medical content common to the medical content shown within the identifying marks 3 provided in the upper region 11 and the top face 23.

Incidentally, as an example of medical content, there is shown a numerical value (0.1%) to mean that 1 mg of medical agent is contained in 1 ml of eye dropper solution. In this way, a value corresponding to medical content can be shown appropriately as needed. Also, in the above, there was shown the example wherein two same or similar circular patterns are provided as the identifying marks 3 in the upper region 11 and the lower region 12, respectively. However, in this invention, the kinds and number of the identifying marks 3 are not particularly limited. Further, such medical content can be shown in only one of the two identifying marks 3 provided in the upper region 11. And, the identifying marks 3 and the showing of medical content in the top face 23 can be omitted.

As shown in Fig. 12, when the sealing label 1 is wrapped over the eye dropper container 2, the upper region 11, the lower region 12 and the top face 23 are provided with the same or similar identifying marks 3 and the common showing of medical content. Therefore, the integrity between the lid portion 21 and the container body 22 can be recognized in a reliable manner from any desired direction.

As shown in Fig. 13, when the sealing label 1 of the eye dropper container 2 is opened, the cutaway region 13 is removed. However, the upper region 11 and the lower region 12 remain affixed to the lid portion 21 and the container body 22, respectively. Therefore, by collating the respective identifying marks 3 provided respectively in the upper region 11, the lower region 12 and the top face 23, the integrity between the lid portion 21 and the container body 22 can be recognized from any direction easily. Moreover, even when identifying marks 3 of a same shape are provided and there are two kinds of eye dropper containers 2 differing in their medical contents, as a common medical content is shown in the upper region 11, the lower region 12 and the top face 23, respectively, such inconvenience of erroneous attaching of the lid portion 21 to the container body 22 can be prevented in a reliable manner.

### [Second Embodiment]

Fig. 14 shows a front view of a sealing label 1 relating to a second embodiment. Incidentally, a rear view of the sealing label 1 will be omitted herein since such view will show in right/left symmetry relative to the front view. In the following, explanation of same features as those in the first embodiment will be omitted and only different features will be explained.

In the cutaway region 13 in this embodiment, there are formed a first region 19 extending from one end to the other end along the direction of wrapping the sealing label 1 over the eye dropper container 2 and a second region 20 extending from the first region 19 toward the upper region 11. That is, this embodiment differs from the first embodiment in that the second region 20 is formed to branch with an inclination from the first region 19 toward the upper region 11.

The second region 20, as shown in Figs. 15 through 17, is formed on the left side of the upper region 11, thus being disposed in such a manner not to provide any adverse effect to the identifying marks 3 provided in the upper region 11. Therefore, this second region 20 achieves enhancement of the visibility of the cutaway region 13 while maintaining the recognizability of the sealing label 1. Further, since this second region 20 is formed with inclination, the tab portion 18 can be gripped with greater ease at the time of opening of the sealing label. 1. Notwithstanding the above, the second region 20 can also be formed without inclination to extend perpendicularly to the first region 19.

The second region 20 includes a right side in which the cut portions 16 extend continuously to the perforation line 14 and a left side in which the cut portions 16 and the uncut portions 17 extend continuously to the perforation line 15. In this arrangement, the right side cut portions 16 are formed large so as to facilitate gripping of the tab portion 18 and the uncut portions 17 are provided on the left side. However, the uncut portions 17 can be provided in the right side too.

Figs. 15 through 17 show modes of the identifying marks 3 comprised of a shape, a pattern, a color or any combination thereof. In Fig. 15, the identifying marks 3 are provided in the upper region 11. In Fig. 16, the identifying marks 3 are provided in the region consisting of the upper region 11 and the cutaway region 13. In Fig. 17, the identifying marks 3 are provided in the region consisting of the upper region 11, the cutaway region 13 and the lower region 12.

Needless to say, the number and layout of the identifying marks 3 in the second embodiment can be used in any combination as desired as described in the first embodiment. That is, respecting the two identifying marks 3 provided in the region including at least the upper region 11 or the lower region 12, either one on the left or the right can be omitted. Further, the plurality of identifying marks 3 provided in the upper region 11 can be provided in any desired combination of the upper region 11, the region consisting of the upper region 11 and the cutaway region 13 or the region consisting of the upper region 11, the cutaway region 13 and the lower region 12.

Incidentally, the identifying marks 3 shown in Figs. 15 through 17 are provided with color tone difference from the remaining portion. However, the color tone can be same.

### [Other Embodiments]

(1) Fig. 18 shows a front view showing a sealing label 1 relating to a further embodiment. In this embodiment, the tab portion 18 is formed to extend from the cutaway region 13 in the first embodiment. With this, the tab portion 18 can be gripped more easily, so that opening of the sealing label 1 can be facilitated.
(2) In the foregoing embodiments, the tab portion 18 is formed integral with the cutaway region 13. Instead, the tab portion 18 can be formed separately of the cutaway region 13 and can be subsequently bonded to this cutaway region 13. This arrangement allows any desired orientation of the leading end of the tab portion 18 in the vertical direction as well as in the right/left direction.
(3) Regarding the shape of the identifying marks 3 provided in the surface of the sealing label 1 of the invention, it can be e.g. a rectangular shape as shown in Figs. 19-21 or a rhombus shape as shown in Figs. 22-24, or an elongate circular shape as shown in Figs. 25-27, or a clover-shape as shown in Figs. 28-30, or a star-shape as shown in Figs. 31-33, or a moon shape as shown in Figs. 34-36, or a teardrop shape as shown in Figs. 37-39, or a Z-shape as shown in Figs. 40-42, or a heart shape as shown in Figs. 43-45, or a C-shape as shown in Figs. 46-48. These particular shapes are only some possible examples. Thus, in the surface of the sealing label 1 of this invention, the identifying marks 3 can be provided with various combinations of shapes, patterns, colors, etc.

Further, needless to say, the number and layout of the identifying marks 3 can be combined as desired as described in the first embodiment. That is, respecting the two identifying marks 3 provided in the region including at least the upper region 11 or the lower region 12, either one on the left or the right can be omitted. Further, the plurality of identifying marks 3 provided in the upper region 11 can be provided in any desired combination of the upper region 11, the region consisting of the upper region 11 and the cutaway region 13 or the region consisting of the upper region 11, the cutaway region 13 and the lower region 12.

Incidentally, the identifying marks 3 shown in Figs. 19 through 48 are provided with color tone difference from the remaining portion. However, the color tone can be same. Further, within these identifying marks 3, characters, numerals or the like indicative of e.g. a content of the ingredients of the eye dropper container 2 can be incorporated.
(4) In the foregoing embodiments, the sealing label 1 has a rectangular shape. However, the shape is not particularly limited as long as it allows wrapping in correspondence with the shape of the eye dropper container 2. For instance, it can be e.g. an elongate circular shape.
(5) The lid portion 21 is not limited to the truncated conical shape and the container body 22 is not limited to the elongate circular shape as described in the foregoing embodiment. Instead, both of these can be provided with angular column-like shape or can be any other shape as well.

### Industrial Applicability

The present invention is applicable to a sealing label which is wrapped over a container holding therein e.g. a liquid agent, a tablet, a granular agent, a particulate agent, etc. and applicable also to a container wrapped with such sealing label.

### Reference Signs List

- 1: sealing label
- 11: upper region
- 12: lower region
- 13: cutaway region
- 14: perforation line (tear-off line)
- 15: perforation line (tear-off line)
- 18: tab portion
- 19: first region
- 20: second region
- 2: eye dropper container (container)
- 21: lid portion
- 22: container body
- 23: top face
- 3: identifying mark (shape, pattern, color or any combination thereof)

## Claims

1. A sealing label (1) for wrapping a container including a container body (22) and a lid portion (21) detachably attached to an outlet of the container body (22), the sealing label (1) comprising:
an upper region (11) covering all or a part of the lid portion (21);
a lower region (12) covering all or a part of the container body (22);
a cutaway region (13) disposed between the upper region (11) and the lower region (12);
a tear-off line (14,15) provided in a boundary between the cutaway region (13) and the lower region (12) as well as in a boundary between the cutaway region (13) and the upper region (11);
**characterized in that** an identifying mark (3) comprised of a graphic pattern is provided to the lower region (12) and a further identifying mark (3) same as or similar to the identifying mark is provided to the upper region (11), a region comprised of the upper region (11) and the cutaway region (13) or a region comprised of the upper region (11), the cutaway region (13) and the lower region (12), thereby to allow recognition of unity between the lid portion (21) and the container body (22).

2. The sealing label (1) according to claim 1, wherein a plurality of the identifying marks (3) are provided in the lower region (12); and/or a plurality of the further identifying marks (3) same as or similar to the identifying marks (3) are provided to the upper region (11), the region comprised of the upper region (11) and the cutaway region (13) or the region comprised of the upper region (11), the cutaway region (13) and the lower region (12).

3. The sealing label (1) according to claim 1 or 2, wherein a tab portion (18) for unsealing is provided in the cutaway region (13).

4. A container wrapped with the sealing label (1) according to any one of claims 1-3.

5. The container according to claim 4, wherein a top face (23) of the lid portion (21) is provided with a further identifying mark (3) same as or similar to the identifying mark (3) provided in the sealing label (1).

## Patentansprüche

1. Siegeletikett (1) zum Umwickeln eines Behälters, umfassend einen Behälterkörper (22) und einen Deckelabschnitt (21), der lösbar an einem Auslass des Behälterkörpers (22) befestigt ist, wobei das Siegeletikett (1) umfasst:
einen oberen Bereich (11), der den gesamten Deckelabschnitt (21) oder einen Teil davon abdeckt;
einen unteren Bereich (12), der den gesamten Behälterkörper (22) oder einen Teil davon abdeckt;
einen Abtrennbereich (13), der zwischen dem oberen Bereich (11) und dem unteren Bereich (12) angeordnet ist;
eine Abrisslinie (14, 15), die in einer Grenze zwischen dem Abtrennbereich (13) und dem unteren Bereich (12) sowie in einer Grenze zwischen dem Abtrennbereich (13) und dem oberen Bereich (11) bereitgestellt ist;
**dadurch gekennzeichnet, dass** eine Identifizierungskennzeichnung (3), die aus einem grafischen Muster besteht, dem unteren Bereich (12) bereitgestellt wird und eine weitere Identifizierungskennzeichnung (3), die gleich oder ähnlich der Identifizierungskennzeichnung ist, dem oberen Bereich (11), einem aus dem oberen Bereich (11) und dem Abtrennbereich (13) bestehenden Bereich oder einem aus dem oberen Bereich (11), dem Abtrennbereich (13) und dem unteren Bereich (12) bestehenden Bereich bereitgestellt wird, um hierdurch eine Erkennung der Einheit zwischen dem Deckelabschnitt (21) und dem Behälterkörper (22) zu erlauben.

2. Siegeletikett (1) nach Anspruch 1, wobei eine Vielzahl der Identifizierungskennzeichnungen (3) in dem unteren Bereich (12) bereitgestellt wird; und/oder eine Vielzahl der weiteren Identifizierungskennzeichnungen (3), die gleich oder ähnlich der Identifizierungskennzeichnungen (3) sind, dem oberen Bereich (11), dem aus dem oberen Bereich (11) und dem Abtrennbereich (13) bestehenden Bereich oder dem aus dem oberen Bereich (11), dem Abtrennbereich (13) und dem unteren Bereich (12) bestehenden Bereich bereitgestellt wird.

3. Siegeletikett (1) nach Anspruch 1 oder 2, wobei in dem Abtrennbereich (13) ein Laschenabschnitt (18) zum Entsiegeln bereitgestellt ist.

4. Mit dem Siegeletikett (1) nach einem beliebigen der Ansprüche 1 bis 3 umwickelter Behälter.

5. Behälter nach Anspruch 4, wobei eine Oberseite (23) des Deckelabschnitts (21) mit einer weiteren Identifizierungskennzeichnung (3) versehen ist, die gleich oder ähnlich der Identifizierungskennzeichnung (3) ist, die in dem Siegeletikett (1) bereitgestellt ist.

## Revendications

1. Étiquette d'étanchéité (1) pour envelopper un récipient doté d'un corps de récipient (22) et d'une partie couvercle (21) fixée de manière amovible à une sortie du corps de récipient (22), l'étiquette d'étanchéité (1) comprenant :
une région supérieure (11) couvrant la totalité ou une partie de la partie couvercle (21) ;
une région inférieure (12) couvrant la totalité ou une partie du corps de récipient (22) ;
une région de coupe (13) placée entre la région supérieure (11) et la région inférieure (12) ;
une ligne déchirable (14, 15) ménagée à une limite entre la région de coupe (13) et la région inférieure (12) ainsi qu'à une limite entre la région de coupe (13) et la région supérieure (11) ;
**caractérisée en ce qu'**une marque d'identification (3) constituée d'un motif graphique est fournie dans la région inférieure (12) et une autre marque d'identification (3) identique ou semblable à la marque d'identification est fournie dans la région supérieure (11), une région constituée de la région supérieure (11) et de la région de coupe (13) ou une région constituée de la région supérieure (11), de la région de coupe (13) et de la région inférieure (12), permettant ainsi la reconnaissance d'une unité entre la partie couvercle (21) et le corps de récipient (22).

2. Étiquette d'étanchéité (1) selon la revendication 1, dans laquelle plusieurs marques d'identification (3) sont fournies dans la région inférieure (12) ; et/ou plusieurs des autres marques d'identification (3) identiques ou semblables aux marques d'identification (3) sont fournies dans la région supérieure (11), la région constituée de la région supérieure (11) et de la région de coupe (13) ou la région constituée de la région supérieure (11), de la région de coupe (13) et de la région inférieure (12).

3. Étiquette d'étanchéité (1) selon la revendication 1 ou 2, dans laquelle une partie languette (18) pour desceller est fournie dans la région de coupe (13).

4. Récipient enveloppé avec l'étiquette d'étanchéité (1) selon l'une quelconque des revendications 1 à 3.

5. Récipient selon la revendication 4, dans lequel une face supérieure (23) de la partie couvercle (21) est fournie avec une autre marque d'identification (3) identique ou semblable à la marque d'identification (3) fournie dans l'étiquette d'étanchéité (1).
